Europäisches Patentamt

European Patent Office

Office européen des brevets

(19)

(11) Numéro de publication : **0 015 184**
**B1**

# (12) FASCICULE DE BREVET EUROPÉEN

(45) Date de publication du fascicule du brevet :
23.12.81

(21) Numéro de dépôt : 80400174.1

(22) Date de dépôt : 05.02.80

(51) Int. Cl.³ : **A 23 C  3/04**, A 23 C  3/08,
A 23 C  9/152

(54) **Procédé et installation de traitement du lait réfrigéré.**

(30) Priorité : 19.02.79 FR 7904102

(43) Date de publication de la demande :
03.09.80 (Bulletin 80/18)

(45) Mention de la délivrance du brevet :
23.12.81 Bulletin 81/51

(84) Etats contractants désignés :
AT BE CH DE FR IT LU NL SE

(56) Documents cités :
DE - A - 1 963 251
DE - C - 336 749
FR - A - 360 679
FR - A - 649 883
FR - A - 859 842
FR - A - 1 538 716
GB - A - 236 247

(73) Titulaire : **L'AIR LIQUIDE, SOCIETE ANONYME POUR
L'ETUDE ET L'EXPLOITATION DES PROCEDES
GEORGES CLAUDE**
75, Quai d'Orsay
F-75321 Paris Cedex 07 (FR)

(72) Inventeur : **de Roissart, Henri**
5, rue Pasteur
F-38610 Gieres (FR)
Inventeur : **Amen, Jean**
118, bd de la Reine
F-78000 Versailles (FR)
Inventeur : **Gouges, Yves**
51, rue Villeras
F-91400 Val d'Alblan - Saclay (FR)

(74) Mandataire : **Bouton Neuvy, Liliane et al**
L'Air liquide, Société Anonyme pour L'Etude et
L'Exploitation des Procédés Georges Claude 75,
Quai d'Orsay
F-75321 Paris Cedex 07 (FR)

Imprimerie Jouve, 17, rue du Louvre, 75001 Paris, France

# 0 015 184

Procédé et installation de traitement du lait réfrigéré

La présente invention concerne le traitement du lait réfrigéré en vue d'améliorer sa conservation.

Le paiement du lait à la qualité bactériologique a entraîné un stockage du lait, sous forme réfrigérée à la ferme et à l'usine, afin d'inhiber le développement de la flore mésophile. L'utilisation du froid s'il a eu des incidences favorables, en particulier en permettant de rendre le producteur moins tributaire des horaires de ramassage, a cependant entraîné une modification de la flore bactérienne du lait cru ; les germes psychrotrophes, germes se développant aux basses températures apparaissent de plus en plus nombreux à côté de la flore lactique traditionnelle.

On entend par « psychrotrophes » des germes qui se développent encore au voisinage de 0 °C et dont l'optimum de croissance est au moins de 10 °C, mais peut atteindre 20 °C et plus. Ils ne constituent pas une classe taxonomique à part ; on les rencontre chez de nombreuses familles : Chromobacterium, Clostridium, Corynebacterium, Flavobacterium, Lactobacillus, Microbacterium, Micrococcus, Pseudomonas, Serratia, Vibrio. Hormis Clostridium et Corynebacterium qui sont anaérobies, les autres genres sont soit aérobies stricts soit aérobies-anaérobies, soit aérobies-anaérobies facultatifs. Ces microorganismes ont une activité lipolytique et/ou protéolytique marquée.

La teneur en bactéries psychrotrophes du lait est fonction de nombreux facteurs : l'hygiène de la traite, le mode d'alimentation des animaux, le nettoyage des installations. De même le rapport flore caséolytique/flore lipolytique varie, il dépend en particulier, de la région et du mois de collecte.

La présence de ces germes psychrotrophes dans le lait réfrigéré, donne lieu à des difficultés de transformation du lait, et à des défauts organoleptiques des laits de consommation et des produits transformés : les enzymes protéolytiques et lipolytiques libérées par la plupart des germes psychrotrophes pourront, par hydrolyse excessive de la matière grasse et de la matière azotée, donner de mauvais goûts aux produits laitiers (ex. fromages, yaourts, crèmes, beurre, crèmes glacées, lait cru, lait pasteurisé, lait stérilisé). Pour certains auteurs, les laits trop chargés en psychrotrophes conduisent en fromagerie à une diminution des rendements en matières azotées.

Suivant la contamination initiale, les conditions de transport, les températures de stockage (ferme et usine), les durées de stockage, le développement de la population « psychrotrophe » est plus ou moins important.

Il est reconnu qu'un refroidissement rapide et poussé permet d'assurer une bonne conservation ; par refroidissement poussé, on entend un refroidissement au voisinage de 0 °C qu'il est difficile d'atteindre industriellement ; si un lait de bonne qualité peut être conservé au-delà de 48 heures, un lait de mauvaise qualité (chargé en psychrotrophes) devra quant à lui, être utilisé le plus tôt possible, surtout si la température de refroidissement n'est pas poussée.

Au début de ce siècle, notamment dans le brevet français 360.679 on a recherché à conserver le lait contenant une flore lactique traditionnelle, en absence totale d'oxygène dissous dans le lait et pour ce faire proposé le déplacement de l'oxygène par un gaz inerte, à ce titre l'azote et l'anhydride carbonique ont été proposés.

Le brevet britannique 236.247 propose pour réaliser l'élimination totale de l'oxygène dissous dans le lait contenant une flore bactérienne traditionnelle, la pulvérisation de celui-ci dans une atmosphère de gaz inerte, tel azote et anhydride carbonique, éventuellement en mélange.

L'absence totale d'oxygène ne permet pas le blocage du développement de tous les germes, notamment celui des germes anaérobies, et de plus la pulvérisation du lait provoque une altération de la qualité.

La demande DE-A-1 963 251 rappelle que l'oxygène peut être chassé par passage d'un courant de gaz tel l'azote et l'anhydride carbonique.

Ces procédés antérieurs considérant l'azote et l'anhydride carbonique inertes vis-à-vis de la flore bactérienne, traditionnelle du lait à température normale, ne sont pas adaptés au blocage de la croissance des germes psychrotrophes qui exigent une combinaison de moyens spécifiquement et critiquement adaptés.

Il a été trouvé un procédé qui permet d'inhiber le développement des germes psychrotrophes.

Ce procédé est mis en œuvre par introduction dans le lait réfrigéré d'un gaz peu soluble dans l'eau et d'anhydride carbonique.

L'introduction d'un gaz peu soluble dans l'eau provoque une désoxygénation du lait par désorption, et l'enrichissement en anhydride carbonique est quant à lui réalisé par l'injection d'anhydride carbonique gazeux.

L'azote se révèle être un excellent agent d'appauvrissement de la teneur en oxygène dissous du lait.

L'absence d'oxygène dans le lait, ainsi que la présence d'anhydride carbonique qui modifie le pH du lait en l'abaissant, constituent des conditions défavorables au développement des germes psychrotrophes.

L'introduction d'azote en quantité telle que la concentration maximale en oxygène dissous dans le lait, en fin de traitement et pendant le stockage avant transformation ou consommation, corresponde à 20 %, et de préférence jusqu'à ce que la concentration maximale en oxygène dissous du lait dans les conditions précédentes corresponde entre 15 et 5 % de la quantité d'oxygène dissous du lait saturé à l'air.

2

L'enrichissement en anhydride carbonique est déjà avantageux quand ce gaz est introduit en quantité telle que la concentration minimale en anhydride carbonique dissous dans le lait, en fin de traitement et pendant le stockage avant transformation ou consommation, soit comprise entre 30 à 70 %, ce qui correspond à un pH du lait compris entre 6,2 et 6 ; et cet intérêt devient optimal quand la concentration en anhydride carbonique dissous dans le lait en fin de traitement et pendant le stockage correspond à 50 à 60 % de la quantité de l'anhydride carbonique dissous dans le lait à saturation de ce gaz ; soit à pH d'environ 6,1.

Les meilleurs résultats sont obtenus en traitement continu et discontinu en procédant à une introduction régulière sous forme finement divisée des deux gaz dans le lait.

L'injection de l'azote et celle de l'anhydride carbonique peuvent être dissociées dans le cas d'une introduction séparée des deux gaz, la désaturation à l'azote précède l'injection d'anhydride carbonique, et les deux gaz introduits à un débit tel que le volume total azote + anhydride carbonique soit de l'ordre de 1,6 par rapport au volume du lait, l'anhydride carbonique étant introduit en quantité supérieure à l'azote.

On peut également effectuer simultanément l'injection des deux gaz, par l'intermédiaire d'un mélange des deux gaz dont l'introduction régulière sous forme finement divisée dans le lait est mise en œuvre à un débit tel que le volume total azote plus anhydride carbonique représente 1 à 1,5 volume du volume du lait. A l'intérieur de cette gamme, on choisit le débit du mélange ainsi que la proportion de chacun des gaz dans le mélange, l'anhydride carbonique étant introduit en quantité supérieure à l'azote.

On a remarqué que pendant la durée du stockage, il est essentiel de ne pas modifier les valeurs des paramètres oxygène dissous et anhydride carbonique dissous, et de les conserver tels qu'ils ont été obtenus grâce au traitement par les gaz. A cet effet, il a été noté qu'il était avantageux de maintenir dans l'espace libre de la partie supérieure de la cuve, une atmosphère d'anhydride carbonique.

On comprend l'intérêt que peut susciter cette technique de conservation du lait réfrigéré sous gaz, en particulier dans le cas où le refroidissement des installations de stockage est insuffisant et lorsque les laits sont très chargés en germes psychrotrophes à la réception. Le traitement par gaz permet de prolonger la durée de stockage, de ce fait le procédé selon l'invention présente des avantages à caractère technique à savoir : une réorganisation possible du stockage, une amélioration de ce stockage sans investissement de matériel de refroidissement. Ce procédé permet, d'une manière générale, une amélioration de la qualité bactériologique du lait, appréciable pour le consommateur.

Le procédé de traitement du lait par l'azote et l'anhydride carbonique n'est pas uniquement applicable au stockage du lait en usine, il peut être également mis en œuvre avec profit, en amont et en aval de ce stockage : à la ferme au niveau des tanks réfrigérés, c'est-à-dire pour le stockage avant ramassage, au cours du transport en citernes mobiles, à l'usine pendant l'attente avant la transformation ou le conditionnement, et au moment du conditionnement pour la conservation du lait de consommation.

Par ailleurs, ce procédé a pour autre avantage d'éliminer les fractions volatiles responsables de goûts désagréables du lait et des produits laitiers.

Avant d'être dirigé vers les ateliers de fabrication ou de conditionnement, le lait doit être dans la plupart des cas dégazé. Les procédés permettant de réaliser cette opération sont bien connus tels dégazage sous vide ou dégazage à l'azote.

Le procédé est mis en œuvre dans une installation comprenant un refroidisseur, une cuve de stockage et une tuyauterie de raccordement entre ces deux éléments. Cette installation comporte un dispositif de mélange de l'azote et de l'anhydride carbonique, et sur la tuyauterie de raccordement un dispositif d'injection du type permettant une introduction régulière et sous forme finement divisée du mélange gazeux azote et anhydride carbonique et éventuellement un dispositif d'injection complémentaire en fond de cuve de stockage.

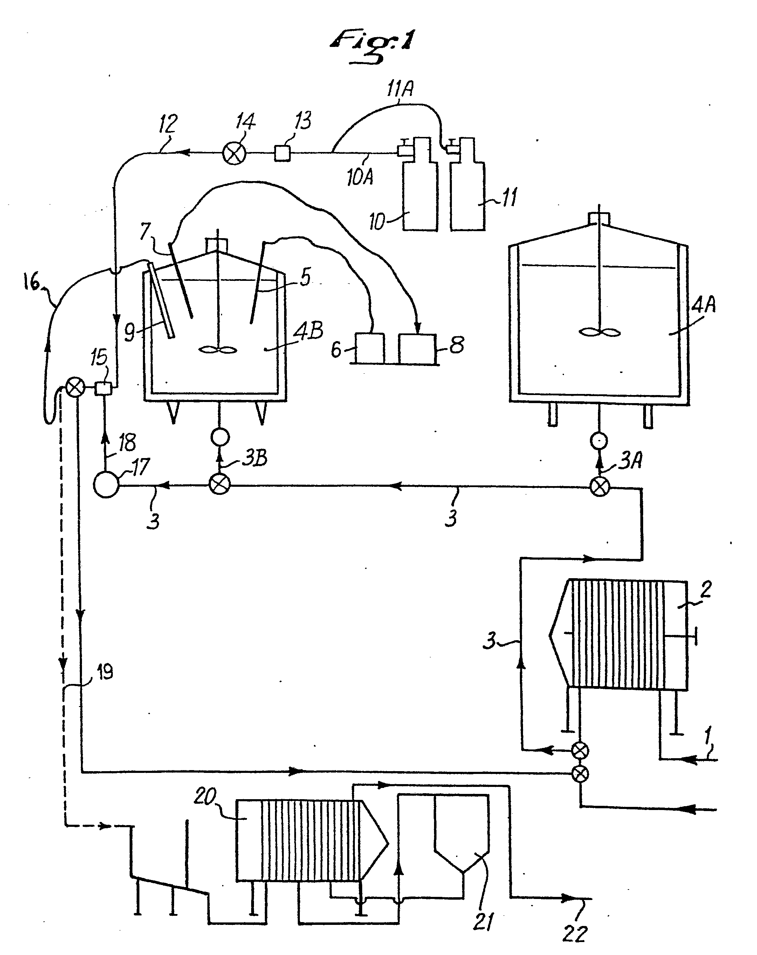

Une installation pilote de traitement du lait par l'azote et l'anhydride carbonique et son poste de dégazage est représentée sur la figure 1 du dessin annexé.

Le lait arrive par la canalisation (1), il traverse le refroidisseur (2), puis il circule ensuite dans la tuyauterie rigide en acier inoxydable (3), qui se sépare en les tuyauteries (3A) et (3B) conduisant le lait respectivement vers la cuve témoin (4A) et la cuve d'essai (4B). La cuve d'essai (4B) est équipée d'une sonde à pH (5) reliée au pH-mètre (6), d'une sonde à oxygène (7) reliée à l'analyseur d'oxygène (8) et d'une canne plongeuse (9). L'azote est stocké dans la bouteille (10) tandis que l'anhydride carbonique est dans la bouteille (11), les deux gaz sont véhiculés par les canalisations (10A) et (11A) vers la canalisation (12) traversant la vanne de réglage de débit (13) et le débitmètre (14), les gaz, l'azote d'abord puis le $CO_2$ par l'intermédiaire de l'injecteur (15) sont injectés dans la tuyauterie souple (16) et la canne plongeuse (9). La canalisation (3) conduit le lait à la pompe de recirculation (17) qui, par la canalisation (18) aboutit à l'injecteur (15). Le lait traité est soutiré et par la canalisation (19) est envoyé au poste de dégazage comprenant l'échangeur (20) où a lieu le dégazage, et le vacréateur (21), le lait dégazé quitte l'installation vers le stockage par la sortie dégazage (22).

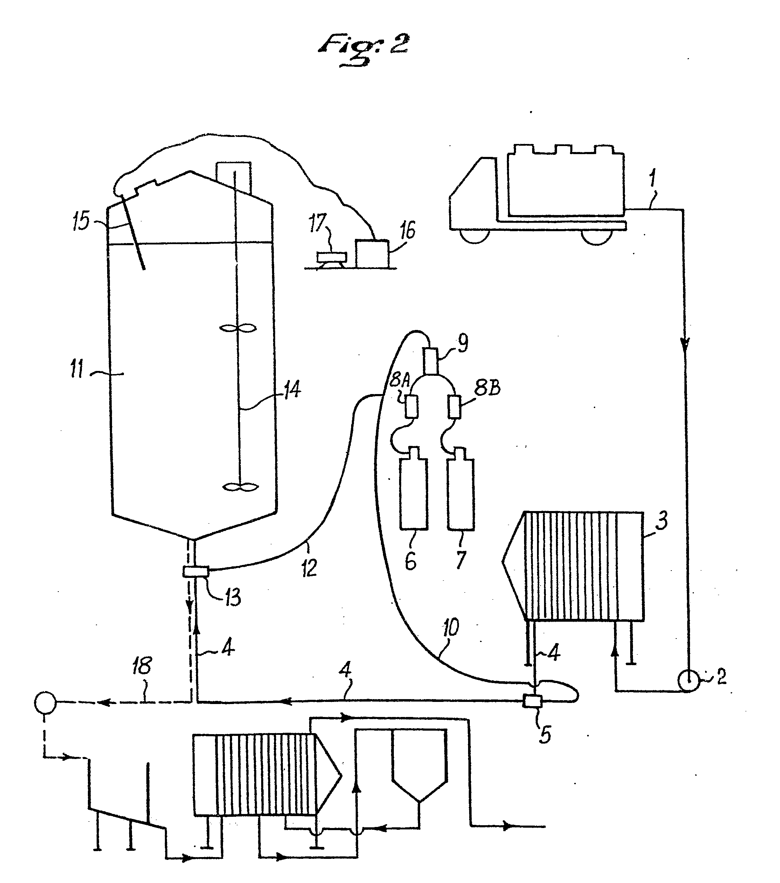

Une installation semi-industrielle de traitement du lait par le mélange azote-anhydride carbonique associée à un poste de dégazage identique à celui de la figure 1, est représentée sur la figure 2.

Le lait arrivant par camion-citerne est conduit par la canalisation (1) au poste de dépotage (2), il traverse le refroidisseur (3) et à la sortie est véhiculé dans la canalisation (4) sur laquelle est intercalé l'injecteur de gaz (5). L'azote est stocké dans la bouteille (6), et l'anhydride carbonique dans la bouteille (7), les gaz traversent respectivement les débitmètres (8A) et (8B) et leur mélange est réalisé dans le mélangeur de gaz (9), par l'intermédiaire de la canalisation (10) le mélange gazeux alimente l'injecteur de gaz (5). Le lait dans lequel le mélange $N_2$-$CO_2$ a été introduit circule dans la canalisation (4) qui aboutit au fond de la cuve (11), par la canalisation (12) et par l'intermédiaire d'un injecteur (13) on peut éventuellement procéder à une introduction complémentaire de gaz. La cuve (11) est équipée d'un agitateur (14), d'une sonde à oxygène (15) reliée à un analyseur (16), et d'un pH-mètre (17). Le lait traité est soutiré par la canalisation (18) et véhiculé jusqu'au poste de dégazage.

Il est donné ci-après des exemples qui illustrent l'invention à titre non limitatif.

## Exemple 1

Deux cuves, l'une de 1 500 litres, l'autre de 2 500 litres, toutes deux isolées thermiquement, ont été utilisées pour l'essai. La cuve de 2 500 litres sert de témoin, celle de 1 500 litres, est la cuve « essai » et donc équipée d'un dispositif de dissolution de gaz (selon figure 1). Ces cuves sont remplies d'un même lait provenant d'exploitations équipées en tanks réfrigérés, dans lesquels six traites consécutives sont accumulées ; le lait est utilisé tel qu'il arrive des citernes de ramassage. Les cuves sont équipées de capteurs de pH et d'oxygène dissous.

la cuve témoin est remplie de 2 200 litres de lait, la cuve essai de 1 500 litres. La température initiale du lait est de 2 °C, le pH de 6,73. L'oxygène dissous correspond à 65 % de la saturation à l'air.

Les contrôles microbiologiques donnent (germes/ml)

|  | Cuve témoin | Cuve essai |
|---|---|---|
| Flore totale aérobie mésophile | 1 500 000 g/ml | 1 600 000 g/ml |
| Psychrotrophes | 800 000 g/ml | 900 000 g/ml |

Le lait de la cuve essai est préalablement traité à l'azote, la pompe est mise en route et, grâce à l'injecteur, 1,050 m³ de ce gaz est introduit dans le lait. Le pourcentage d'oxygène résiduel correspond à 10 % de la saturation à l'air. Par le même système 1,4 m³ d'anhydride carbonique est ensuite introduit dans le lait, le pH après traitement au $CO_2$ est de 6. Les laits, témoin et essai, sont conservés 48 h.

En fin de stockage, la température est de 7 °C. Le pH est de 6,72 dans le cas témoin, et de 6,1 pour la cuve « essai ». L'oxygène dissous n'a pas varié. Les contrôles microbiologiques effectués à ce moment là, donnent les résultats suivants :

|  | Cuve témoin | Cuve essai |
|---|---|---|
| Flore totale aérobie mésophiles | 8 000 000 g/ml | 1 800 000 g/ml |
| Psychrotrophes | 9 000 000 g/ml | 900 000 g/ml |

Dans le cas de l'essai, le traitement a permis d'inhiber totalement le développement des psychrotrophes. La population du témoin s'est accrue d'un facteur 10. L'observation est également valable pour la flore totale aérobie mésophile.

## Exemple 2

L'expérimentation est conduite dans un réservoir de stockage de 10 000 litres isolé thermiquement, tel qu'on en trouve généralement en industrie laitière. Le lait provient d'une citerne de ramassage et, sitôt son arrivée, passe au travers d'un échangeur à plaques pour être refroidi avant le stockage.

Ce réservoir est équipé dans sa partie supérieure, d'une sonde à oxygène ainsi que d'une sonde de pH selon la figure 2.

Le traitement par le gaz s'effectue au moment du remplissage du réservoir, directement dans la tuyauterie de transfert en aval de l'échangeur à plaques.

Des témoins sont effectués à partir de lait « grand mélange » stocké pendant une durée équivalente à la durée de stockage de la cuve « essai ».

8,7 m³ de lait sont traités, le mélange de gaz utilisé lors du traitement en continu au moment du remplissage est le suivant :

— 18,6 % d'$N_2$
— 81,35 % de $CO_2$

On introduit 1,4 volume de gaz par volume de lait. Le lait après traitement a les caractéristiques suivantes :

— Oxygène dissous   9 % de la saturation à l'air
— pH   5,95
— T°   4 °C
— Flore totale
  aérobie mésophile   1 100 000 g/ml
— Flore totale
  aérobie psychrotrophe   1 100 000 g/ml

Après 48 h de conservation sous gaz, le lait a les caractéristiques suivantes :

— Oxygène dissous   5 % de la saturation à l'air
— pH   6,16
— T°   5 °C
— Flore totale
  aérobie mésophile   1 400 000 g/ml
— Flore totale
  aérobie psychrotrophe   1 700 000 g/ml

On note que le traitement a bloqué le développement des germes psychrotrophes :

le rapport des populations $\dfrac{\text{psychrotrophes après stockage}}{\text{psychrotrophes avant stockage}} = 1,5,$

alors que pour les témoins correspondants, ce rapport (taux de multiplication) varie entre 5 et 11, pour une population initiale en germes psychrotrophes de l'ordre 1 000 000 g/ml (T° de stockage : 3 à 4 °C).

## Exemple 3

L'expérimentation est conduite dans un réservoir de stockage de 10 000 litres isolé thermiquement, tel qu'on en trouve généralement en industrie laitière. Le lait provient d'une citerne de ramassage et, sitôt son arrivée, passe au travers d'un échangeur à plaques pour être refroidi avant le stockage.

Ce réservoir est équipé dans sa partie supérieure, d'une sonde à oxygène ainsi que d'une sonde de pH selon la figure 2.

Le traitement par le gaz s'effectue au moment du remplissage du réservoir, directement dans la tuyauterie de transfert en aval de l'échangeur à plaques.

Des témoins sont effectués à partir de lait « grand mélange » stocké pendant une durée équivalente à la durée de stockage de la cuve « essai ».

Le lait avant traitement a un pH de 6,65 et les caractéristiques suivantes :

— Flore totale
  aérobie mésophile   8 000 000 g/ml
— Flore totale
  aérobie psychrotrophe   7 200 000 g/ml

6,8 m³ de lait sont traités, le mélange de gaz utilisé lors du traitement en continu au moment du remplissage est le suivant :

26,7 % d'$N_2$
73,3 % de $CO_2$

On introduit 1,38 volume de gaz par volume de lait.
Le lait après traitement a les caractéristiques suivantes :

— Oxygène dissous   ~ 10 % de la saturation à l'air
— pH   6,08
— T°   5 °C

Après 24 h de conservation sous gaz, le lait a les caractéristiques suivantes :
— Oxygène dissous de l'ordre   7 % de la saturation à l'air
— pH   6,10
— T°   5 °C

— Flore totale
aérobie mésophile 9 600 000 g/ml
— Flore totale
aérobie psychrotrophe 7 200 000 g/ml

On note que le traitement a bloqué le développement des germes psychrotrophes :

le rapport des populations $\dfrac{\text{psychrotrophes après stockage}}{\text{psychrotrophes avant stockage}} = 1,$

alors que pour les témoins correspondants, ce rapport (taux de multiplication) varie d'un facteur d'environ 2 pour les germes psychrotrophes et sensiblement de 3 pour la flore totale aérobie mésophile. Dans les témoins après 24 heures à 5 °C sans traitement, la flore totale est de 26 000 000 g/ml et la flore psychrotrophe est de 14 000 000 g/ml.

**Revendications**

1. Procédé de traitement de fait réfrigéré en vue de l'inhibition du développement des germes psychrotrophes, par l'azote et l'anhydride carbonique, caractérisé en ce que les deux gaz sont introduits dans le lait réfrigéré de manière régulière et sous forme finement divisée, l'azote étant introduit en quantité telle que la concentration maximale en oxygène dissous dans le lait en fin de traitement et pendant le stockage corresponde à 20 % de la quantité d'oxygène dissous du lait saturé à l'air et l'anhydride carbonique étant introduit en quantité telle que la concentration en anhydride carbonique dissous dans le lait en fin de traitement et pendant le stockage corresponde à 30 à 70 % de la quantité de l'anhydride carbonique dissous dans le lait à saturation de ce gaz, l'anhydride carbonique étant introduit en quantité supérieure à l'azote.

2. Procédé de traitement du lait réfrigéré selon la revendication 1, caractérisé en ce que l'azote est introduit en quantité telle que la concentration maximale en oxygène dissous dans le lait en fin de traitement et pendant le stockage corresponde entre 15 et 5 % de la quantité d'oxygène dissous du lait saturé à l'air et en ce que l'anhydride carbonique est introduit en quantité telle que la concentration en anhydride carbonique dissous dans le lait en fin de traitement et pendant le stockage corresponde à 50 à 60 % de la quantité d'anhydride carbonique dissous dans le lait à saturation de ce gaz.

3. Procédé de traitement du lait réfrigéré en vue de l'inhibition du développement des germes psychrotrophes par l'azote et l'anhydride carbonique caractérisé en ce que :
   a) l'on introduit dans le lait à réfrigérer de manière régulière et sous forme divisée un mélange d'azote et d'anhydride carbonique ;
   b) le mélange des deux gaz est introduit à un débit tel que le volume total azote plus anhydride carbonique soit 1 à 1,5 par rapport au volume du lait ;
   c) l'azote est introduit en quantité telle que la concentration maximale en oxygène dissous dans le lait en fin de traitement et pendant le stockage corresponde à 20 % de la quantité d'oxygène dissous du lait saturé à l'air ;
   d) l'anhydride carbonique est introduit en quantité telle que la concentration en anhydride carbonique dissous dans le lait en fin de traitement et pendant le stockage corresponde à 30 à 70 % de la quantité de l'anhydride carbonique dissous dans le lait à saturation de ce gaz ;
   e) l'anhydride carbonique est introduit en quantité supérieure à l'azote.

4. Procédé de traitement du lait réfrigéré selon la revendication 3, caractérisé en ce que l'azote est introduit en quantité telle que la concentration maximale en oxygène dissous dans le lait en fin de traitement et pendant le stockage corresponde entre 15 et 5 % de la quantité d'oxygène dissous du lait saturé à l'air et en ce que l'anhydride carbonique est introduit en quantité telle que la concentration en anhydride carbonique dissous dans le lait en fin de traitement et pendant le stockage à 50 à 60 % de la quantité de l'anhydride carbonique dissous dans le lait à saturation de ce gaz.

5. Procédé de traitement du lait réfrigéré selon la revendication 1, caractérisé en ce que l'azote puis l'anhydride carbonique sont introduit à un débit tel que le volume total des deux gaz azote plus anhydride carbonique soit de l'ordre de 1,6 par rapport au volume du lait, le volume de l'anhydride carbonique étant supérieur à celui de l'azote.

6. Installation pour la mise en œuvre du procédé de traitement du lait réfrigéré selon la revendication 3, comprenant un refroidisseur (3-fig. 2) une cuve de stockage (11-fig. 2) et une tuyauterie de raccordement (4-fig. 2) entre ces deux éléments, caractérisé en ce que cette installation comporte un dispositif de mélange de l'azote et de l'anhydride carbonique (9-fig. 2) et sur la tuyauterie de raccordement un dispositif d'injection (5-fig. 2) du type permettant une introduction régulière et sous forme divisée du mélange gazeux azote et anhydride carbonique, et en outre un dispositif d'injection complémentaire (13-fig. 2) en fond de cuve de stockage.

7. Application du procédé de traitement du lait réfrigéré selon la revendication 1, au stockage à la ferme au niveau des tanks réfrigérés, au cours du transport en citernes mobiles, à l'usine avant conditionnement ou transformation et pour la conservation du lait de consommation.

## Claims

1. Process to treat refrigerated milk to avoid development of psychrotrophic germs by nitrogen and carbon dioxide, characterized by that the two gases are introduced into the refrigerated milk regularly and sharply divided, the nitrogen being introduced in such a quantity that the maximum concentration of oxygen dissolved in the milk for treatment and during the stockage corresponds to 20 % of the quantity of oxygen dissolved of the milk saturated with air and carbon dioxide being introduced in such a quantity that the concentration of carbon dioxide dissolved in the milk for treatment and during the stockage corresponds to 30 to 70 % of the quantity of carbon dioxide dissolved in the milk with saturation of this gas, the carbon dioxid being introduced in higher quantity than the nitrogen.

2. Process to treat refrigerated milk according to claim 1, characterized by that the nitrogen is introduced in such a quantity that the maximum concentration of oxygen dissolved in the milk for treatment and during the stockage corresponds between 15 and 5 % of the quantity of oxygen dissolved of the milk saturated with air and that the carbon dioxide is introduced in such a quantity that the concentration of carbon dioxide dissolved in the milk for treatment and during the stockage corresponds to 50 to 60 % of the quantity of carbon dioxide dissolved in the milk with saturation of this gas.

3. Process to treat refrigerated milk to avoid the development of psychrotrophic germs by nitrogen and carbon dioxide, characterized by that :

a) one introduces into the milk to be refrigerated regularly and sharply divided a mixture of nitrogen and carbon dioxide ;

b) the mixture of the two gases is introduced with such a rate that the total volume nitrogen plus carbon dioxide is 1 to 1,5 in relation to the volume of the milk,

c) the nitrogen is introduced in such a quantity that the maximum concentration of oxygen dissolved in the milk for treatment and during the stockage corresponds to 20 % of the quantity oxygen dissolved of the milk saturated with air ;

d) the carbon dioxide is introduced in such a quantity that the concentration of carbon dioxide dissolved in the milk for treatment and during the stockage corresponds to 30 to 70 % of the quantity of carbon dioxide dissolved in the milk by saturation of this gas ;

e) the carbon dioxide is introduced in a quantity higher than the nitrogen.

4. Process to treat refrigerated milk according to claim 3, characterized by that the nitrogen is introduced in such a quantity that the maximum concentration of oxygen dissolved in the milk for treatment and during the stockage corresponds between 15 and 5 % of the quantity oxygen dissolved of the milk saturated with air and that the carbon dioxide is introduced in such a quantity that the concentration of carbon dioxide dissolved in the milk for treatment and during the stockage corresponds to 50 to 60 % of the quantity of carbon dioxide dissolved in the milk by saturation of this gas.

5. Process to treat refrigerated milk according to claim 4, characterized by that the nitrogen and then carbon dioxide are introduced with such a rate that the total volume of these two gases nitrogen plus carbon dioxide is in the order of 1,6 in relation to the volume of the milk, the volume of the carbon dioxide being higher than that of the nitrogen.

6. Installation to perform the process of treating of refrigerated milk according to claim 3, comprising a refrigerator (3 - Fig. 2), a stockage container (11 - Fig. 2), and connecting tubes (4 - Fig. 2) between these two elements, characterized by that this installation comprises a device to mix the nitrogen and the carbon dioxide (9 - Fig. 2) and an injection device (5 - Fig. 2) in the connecting tubes such that they permit a regular and divided introduction of the gas mixture nitrogen and carbon dioxide, and further a complementary injection device (13 - Fig. 2) at the bottom of the stockage container.

7. Application of the process to treat refrigerated milk according to claim 1 to the stockage in the farm in refrigerated tanks, during the transport in mobil containers, in the factory before conditioning or transforming and for the conservation of the milk for consumption.

## Ansprüche

1. Verfahren zum Behandeln gekühlter Milch zur Verhinderung des Entwickelns psychrotropher Keime durch Stickstoff Kohlendioxid, dadurch gekennzeichnet, daß die zwei Gase in die gekühlte Milch regelmäßig und in scharf getrennter Form eingeführt werden, der Stickstoff in einer solchen Menge eingeführt wird, daß die Maximalkonzentration an Sauerstoff, der in der Milch gelöst ist, zwecks der Behandlung und während der Lagerung 20 % der Menge Sauerstoff entspricht, die in der mit Luft gesättigten Milch gelöst ist, und das Kohlendioxid in einer solchen Menge eingeführt wird, daß die Konzentration an Kohlendioxid, welches in der Milch gelöst ist, zwecks der Behandlung und während der Lagerung 30 bis 70 % der Menge an Kohlendioxid entspricht, welches in der Milch bei Sättigung dieses Gases gelöst ist, und daß das Kohlendioxid in einer größeren Menge als der Stickstoff eingeführt wird.

2. Verfahren zur Behandlung gekühlter Milch nach Anspruch 1, dadurch gekennzeichnet, daß der Stickstoff in einer solchen Menge eingeführt wird, daß die Maximalkonzentration an Sauerstoff, der in der Milch gelöst ist, für die Behandlung und während der Lagerung zwischen 15 und 5 % der Menge gelösten Sauerstoffs der mit Luft gesättigten Milch entspricht, und daß das Kohlendioxid in einer solchen Menge eingeführt wird, daß die Konzentration an in der Milch gelöstem Kohlendioxid zwecks der Behandlung und während der Lagerung 50 bis 60 % der Menge Kohlendioxid entspricht, welches in der Milch bei Sättigung dieses Gases gelöst ist.

3. Verfahren zur Behandlung von gekühlter Milch zum Vermeiden des Entwickelns psychrotropher Keime durch Stickstoff und Kohlendioxid, dadurch gekennzeichnet, daß :

a) man in die zu kühlende Milch ein Gemisch von Stickstoff und Kohlendioxid regelmäßig und in getrennter Form einführt ;

b) das Gemisch der zwei Gase in einer solchen Menge eingeführt wird, daß das Gesamtvolumen Stickstoff plus Kohlendioxid 1 bis 1,5 bezüglich des Volumens der Milch ist ;

c) der Stickstoff mit einer solchen Menge eingeführt wird, daß die Maximalkonzentration an in der Milch gelöstem Sauerstoff zwecks der Behandlung und während der Lagerung 20 % der Menge Sauerstoff entspricht, die in der mit Luft gesättigten Milch gelöst ist ;

d) das Kohlendioxid mit einer solchen Menge eingeführt wird, daß die Konzentration an in der Milch gelöstem Kohlendioxid zwecks der Behandlung und während der Lagerung 30 bis 70 % der Menge Kohlendioxid entspricht, welches in der Milch bei Sättigung dieses Gases gelöst ist ;

e) das Kohlendioxid mit einer größeren Menge als der Stickstoff eingeführt wird.

4. Verfahren zum Behandeln gekühlter Milch nach Anspruch 3, dadurch gekennzeichnet, daß der Stickstoff in einer solchen Menge eingeführt wird, daß die Maximalkonzentration an in der Milch gelöstem Sauerstoff für die Behandlung und während der Lagerung zwischen 15 und 5 % der Menge Sauerstoff entspricht, die in der mit Luft gesättigten Milch gelöst ist, und daß das Kohlendioxid in einer solchen Menge eingeführt wird, daß die Konzentration an in der Milch gelöstem Kohlendioxid zwecks der Behandlung und während der Lagerung 50 bis 60 % der Menge an Kohlendioxid entspricht, welches in der Milch bei Sättigung dieses Gases gelöst ist.

5. Verfahren zur Behandlung der gekühlten Milch nach Anspruch 4, dadurch gekennzeichnet, daß der Stickstoff und dann das Kohlendioxid in einer solchen Menge bzw. mit einem solchen Durchsatz eingeführt werden, daß das Gesamtvolumen der zwei Gase Stickstoff plus Kohlendioxid in der Größenordnung von 1,6 in Bezug auf das Volumen der Milch ist, wobei das Volumen Kohlendioxid größer als das an Stickstoff ist.

6. Anlage zur Durchführung des Verfahrens zum Behandeln der gekühlten Milch nach Anspruch 3 mit einer Kühleinrichtung (3 - Fig. 2), einem Lagerbehälter (11 - Fig. 2) und einem Anschlußrohrsystem (4 - Fig. 2) zwischen diesen zwei Elementen, dadurch gekennzeichnet, daß diese Anlage eine Vorrichtung aufweist zum Mischen von Stickstoff und Kohlendioxid (9 - Fig. 2) und in dem Anschlußrohrsystem eine Einspritzvorrichtung (5 - Fig. 2) derart aufweist, daß diese ein gleichmäßiges und getrenntes Einführen des Gasgemisches Stickstoff und Kohlendioxid erlaubt, und daß außerdem eine Ergänzungseinspritzvorrichtung (13 - Fig. 2) am Boden des Lagerbehälters vorgesehen ist.

7. Anwendung des Verfahrens zum Behandeln der gekühlten Milch nach Anspruch 1 auf die Lagerung auf dem Bauernhof in gekühlten Tanks, im Verlaufe des Transportes in mobilen Behältern, in der Fabrik vor dem Konditionieren oder Verarbeiten und für das Konservieren der Verbrauchsmilch.

## Fig.1

# Fig. 2